Europäisches Patentamt

(19) European Patent Office    (11) Publication number: **0 003 185**

Office européen des brevets    **B1**

(12) **EUROPEAN PATENT SPECIFICATION**

(45) Date of publication of patent specification: **03.02.82**    (51) Int. Cl.³: **F 03 D 1/04, F 03 G 7/02 //F24J3/02**

(21) Application number: **79300071.2**

(22) Date of filing: **17.01.79**

(54) Harnessing natural energy.

(30) Priority: **18.01.78 US 870336**

(43) Date of publication of application:
**25.07.79 Bulletin 79/15**

(45) Publication of the grant of the European patent:
**03.02.82 Bulletin 82/5**

(84) Designated Contracting States:
**BE CH DE FR GB LU NL SE**

(56) References cited:
**FR - A - 1 590 838**
**US - A - 4 017 205**

(73) Proprietor: **Snook, Stephen Robert**
**P.O. Box 846**
**Port Hueneme, California 93041 (US)**

(72) Inventor: **Snook, Stephen Robert**
**P.O. Box 846**
**Port Hueneme, California 93041 (US)**

(74) Representative: **Slight, Geoffrey Charles et al,**
**Graham Watt & Co. Riverhead**
**Sevenoaks Kent TN13 2BN (GB)**

# Harnessing natural energy

The invention relates generally to harnessing natural energy in the form of wind and/or solar radiation to generate or augment natural wind. Such energy may then be used to generate electricity of some other useful form of power.

Prior systems for generating electricity have generally included the use of fuels, nuclear energy, windmills and the like. Prior fuel-powered systems produce ecologically harmful wastes and are economically inefficient. Prior wind powered systems are inadequate for large scale energy production. Prior uses of solar energy have generally included heating and electricity production utilising photo-electric cells. French Patent Specification No. 1,590,838 describes an electricity generating station which is powered by an ascending current of hot air. The air is heated in a solar heater situated on the side of a hill, a turbine and generator being arranged at the top of the heater. This known system works on the principle of raising the temperature of the air within the apparatus by means of the sun in order to make the air rise and drive the turbine.

According to the present invention there is provided apparatus for use in harnessing natural energy, particularly solar energy in the form of wind, and comprising in combination a thin and relatively flexible canopy extending over a formation of the earth's surface to define a longitudinally elongated duct having a relatively larger opening at a lower altitude end of the duct and a relatively smaller opening at a higher altitude end of the duct, the duct cross-section tapering substantially continuously in the direction up the duct between the larger lower opening and the smaller higher opening and serving to channel and accelerate prevailing airflow in the direction up the duct. The effect of the canopy is to cause the natural airflow to accelerate, converting some of its internal energy into velocity and otherwise confining the airflow and concentrating it in a single, defined opening where it is readily harnessed and its energy extracted in the form of useful power, for example, using fewer and smaller turbines than would otherwise be required to obtain the same power output from natural wind forces alone.

Preferably, the canopy is substantially transparent to solar radiation passage through the canopy for impinging on, and heating, the formation's walls, thereby to impart heat to the air proximate the walls and located within said duct, the heated air, being of lesser density, being thereby caused to enter the duct at the said upper opening and colder, more dense air being thereby cause to enter the duct at the lower opening, said heated air being channeled by said duct in its flow to the smaller opening where it is emitted, said cooler air entering the duct at the lower opening then being heated by the formation's walls, and caused to flow upward to the smaller opening, generating a continuous flow within said duct.

The arrangement of the canopy may be such that the canopy is at least partially supported by the enclosed heated air.

Since the apparatus of the invention is not intended to utilize consumable fuels, it is highly inexpensive in daily operation. Also, polluting by-products are eliminated. Use of the invention allows a reduction in the number of fuel consuming power production plants required in a given area as peak wind and solar inputs tend to coincide with peak periods of peak power consumption.

In contrast to the arrangement described in French Patent Specification No. 1,590,838, in the apparatus of the present invention the duct substantially continuously converges towards the upper end in order to accelerate the prevailing air flow which can then be employed to drive a turbine. Wind action alone can provide the airflow necessary for power generation.

Some ways of carrying out the invention are described in detail below with reference to drawings which illustrate specific embodiments. In the drawings:—

Fig. 1 is a perspective view of one apparatus in accordance with the invention,

Fig. 2 is a top plan view of a portion of the apparatus of Fig. 1,

Fig. 3 is a vertical section across the apparatus of Fig. 1,

Fig. 4 is an enlarged top plan view part of the Fig. 1 apparatus,

Fig. 5 is an enlarged section on lines 5—5 of Fig. 4,

Fig. 6 is an enlarged vertical section taken on lines 6—6 of Fig. 4; and Fig. 6a shows a modification, similar to Fig. 6,

Fig. 7 is an elevation taken in section lengthwise in Fig. 1,

Fig. 8 is another view like Fig. 7,

Fig. 9 is an enlarged side elevation, partly in section, through part of Fig. 1,

Fig. 10 is a top plan view of the part of the apparatus shown in Fig. 9, and

Fig. 11 is a view like Fig. 6, showing a modification.

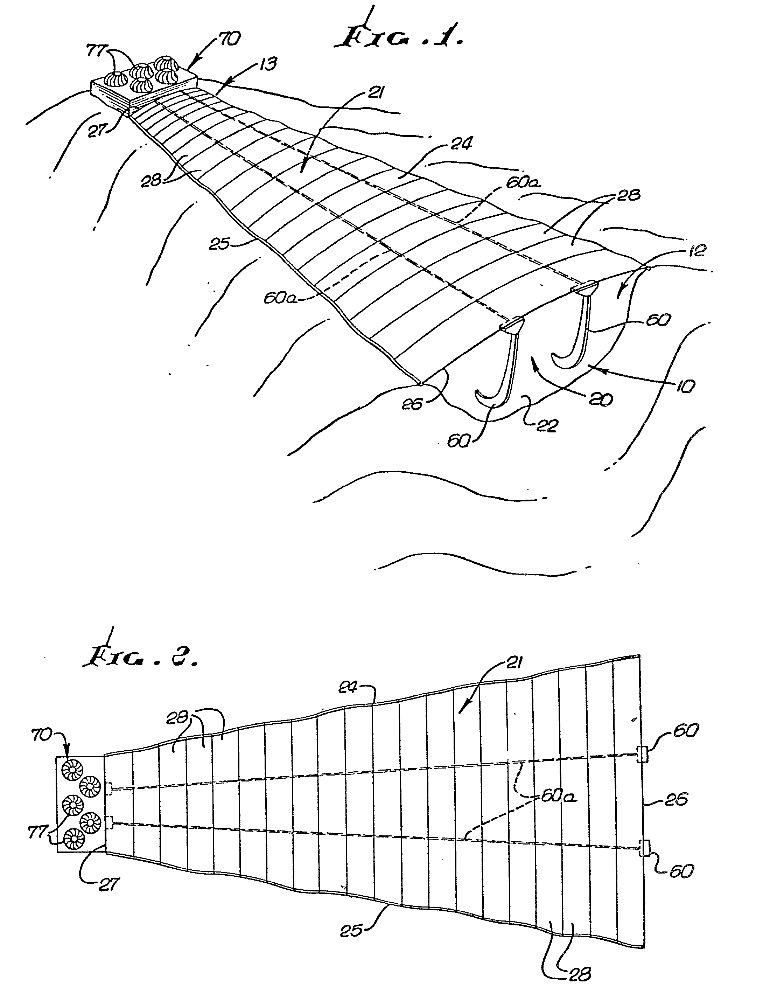

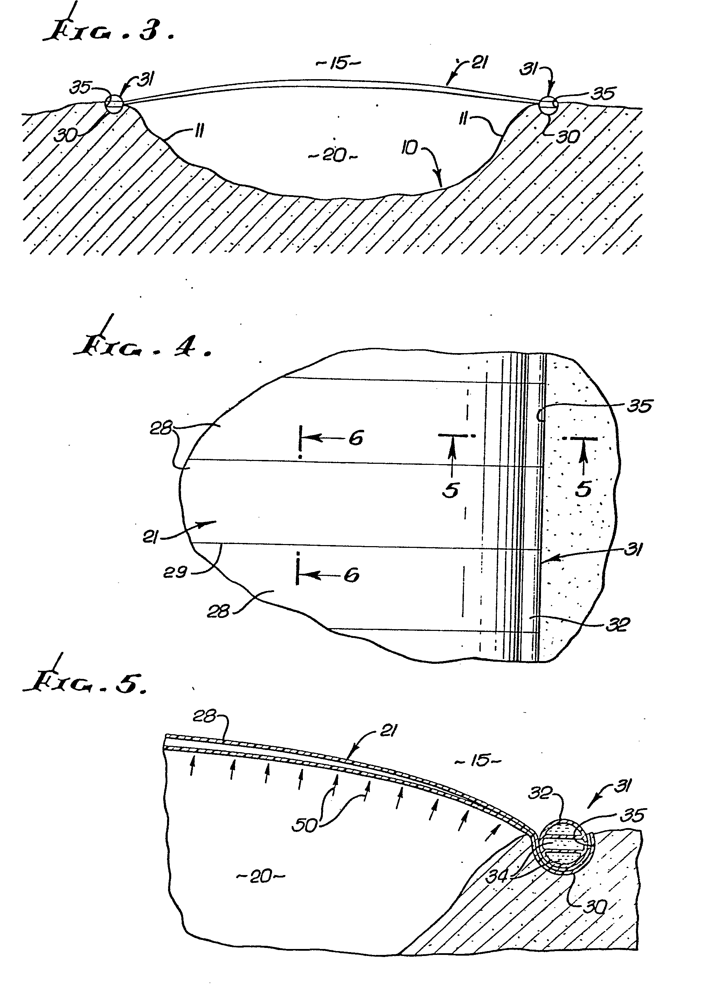

Fig. 1 shows a canopy which extends transversely and lengthwise over a substantial portion of a canyon 10 to form, in combination with the canyon, a longitudinally elongated duct 20 having a relatively large entrance opening 22 at a lower portion 12 of the canyon and a relatively smaller exit opening 23 at an upper portion 13 of the canyon. Instead of a canyon, any suitable natural formation of the earth's surface or a man-made depression or channel cut in the earth's surface, may be used. In this embodiment, the canopy 21 has a generally trapezoidal shape, with the first 24 and second 25 opposite edges of the canopy, corresponding to the non-parallel converging sides of the trapezoid, being each elongated and adapted to conform to the topography of the opposite side walls 11 of the canyon 10. Such opposite edges may advantageously form substantially air tight seals 30 at the canyon walls.

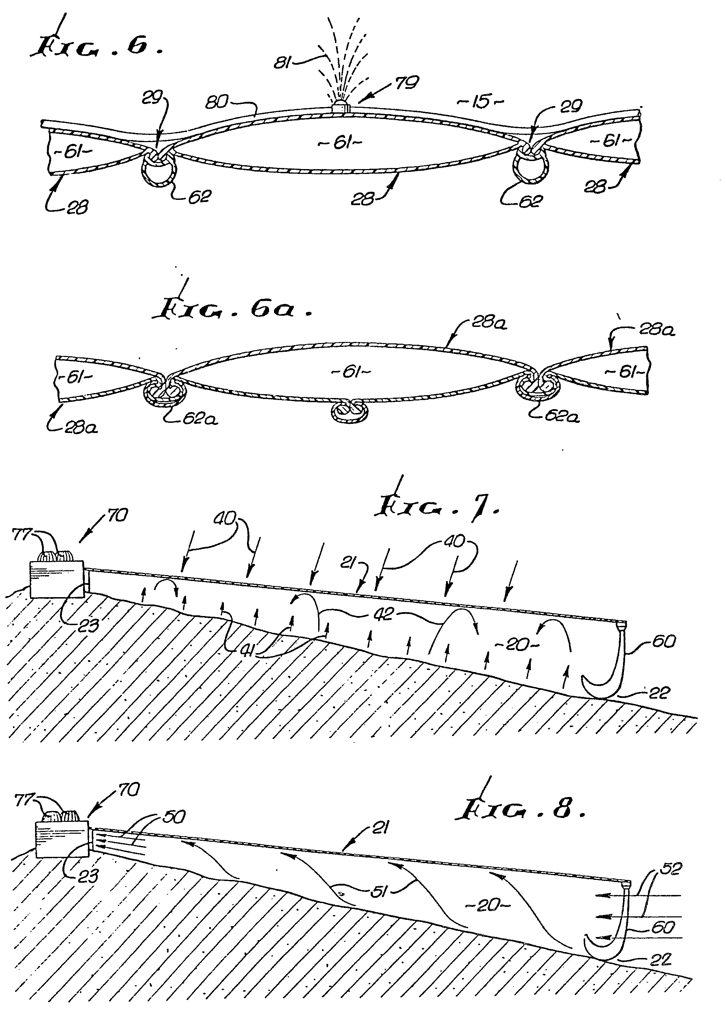

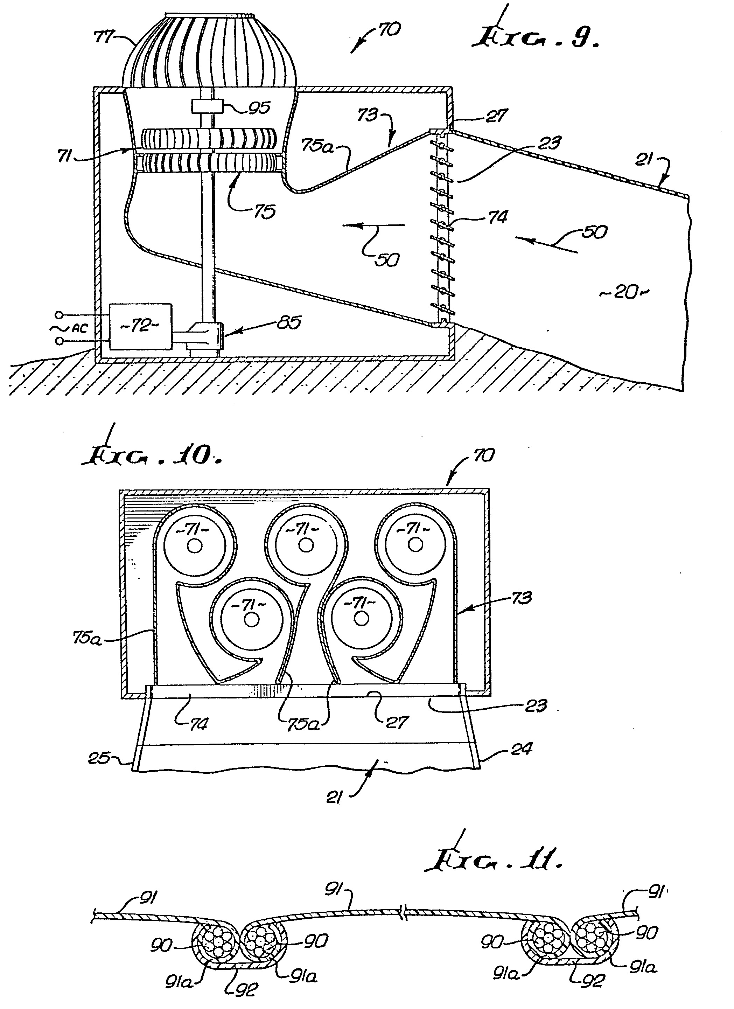

Fig. 5 shows a typical attachment means 31 in cross-section. It comprises a generally tubular chamber 32 connected with the edge of the canopy 21, with interior partitioning walls forming a series of spaced chambers 34 for containing water, sand, concrete or other pourable material. A trough 35 is formed in the canyon wall 11 ccorresponding to and adapted to receive the tubular chamber 32, such that a flexible, mouldable, load retentive, and substantially air tight seal 30 is formed between the typically water filled tubular chamber 32 and the trough 35. Heated air is retained within and channeled by the duct 20 thus formed. Tubes 30 may consist of rubber, plastics, or other natural or synthetic materials which will substantially retain the filling material selected.

Edge 26 of the canopy 21, corresponding to the longer of the two parallel edges of a trapezoid, extends between the described first 24 and second 25 edges of the canopy. Edge 26, in combination with the canyon 10, forms the larger, lower entrance opening 22 of the duct as shown in Fig. 1.

The fourth edge 27 of the canopy 21 corresponding to the shorter of the two parallel edges of a trapezoid extends between the first and second edges 24 and 25, and in combination with the canyon 10, forms the smaller, upper exit opening 23 of the duct 20 and serves to channel the flow of heated air 50 generated in the duct 20 into the power generating means 70 in Fig. 1.

The canopy 21 itself is preferably formed of substantially transparent material to pass solar, radiation, and may be constructed of modular sheets or panels 28. The latter may be interconnected by attachment means 29 to facilitate repair of replacement of damaged portions of the canopy. The panels 28 may each be formed of two like sheets of plastics sheet material spaced apart as shown in Fig. 6 to provide dead air space 61 insulating the duct 20 from the surrounding air of the environment 15. A typical sheet form material consists of that sold under the Trade Mark "TEDLAR", or other sheet plastics or glass fibre reinforced plastics such as the materials sold under the Trade Mark "KALWALL" and "SUN-LITE". Other materials of like nature (lightweight, flexible) could be used, as for example a thin metal foil, although the latter might be environmentally unacceptable. Fig. 6a is like Fig. 6 but shows replaceable panels 28a removably assembled, as shown, by clips 62a.

Referring to Fig. 8, the prevailing wind 52 is channelled from the lower entrance opening 22 and accelerated by the convergence of the duct 20 into power generating means 70 located proximate to the upper end of the duct 23 at or near the head of the canyon 10. Said acceleration tends to convert some of the internal energy of the air into increased velocity, as well as reducing the cross-sectional area of the power generating means 70 for a given power output, thereby allowing the use of fewer and smaller turbines 71 in the generating process.

Referring to Fig. 7, the canopy 21 passes solar radiation 40 into the canyon and substantially reflects (at 42) and retains within the duct and canyon 20 radiation reflected at 41 by the canyon walls and bottom. The radiation heated canyon walls impart heat to the surrounding air within the duct 20 to generate the airflow or convection at 51 in Fig. 8. Typically, the heated, less dense air 50 rises from the canyon walls 11 generally upwardly toward the smaller exit opening 23 of the duct 20, and is replaced by the colder, more dense air 52 entering the duct 20 at the lower entrance opening 22. The duct 20 serves to channel the heated air 50 into the power generating means 70 located proximate the upper end of the duct 23, at or near the heat of the canyon 10. Similarly, as explained above, wind action alone may provide the airflow necessary for power generation, or solar heating effects may combine with the natural wind to enhance airflow up the canyon.

Several means are provided which either independently, or together, retain the canopy in a suspended condition with respect to the canyon 10. These include the use of lightweight plastics material for the canopy such that the low density enclosed air 50 will suspend the canopy, similar to a hot air balloon. The previously described water filled tube portion 32 and trough 35 edge attachment means to Fig. 5 also serve to anchor and retain the canopy 21 and integral cables 90 in a stretched and thereby suspended condition. Pylon and cable structure may be provided, with rocker pylons 60 at the lower opening 22, and longitudinal cables 60a running lengthwise of the canyon, as shown in Fig. 1, to retain the canopy proximate the opening in a suspended condition. The pocket at cell 61 between sheets of panel material can be filled with lighter than air gas, i.e. Helium, or pressurized with air, to stiffen the cells and thereby provide additional structural support for the canopy. Finally, additional inflatable tubular portions 62 can be provided proximate junctions 29, and inflated, to provide structural support for the canopy.

As shown in Fig. 6, cleaning means 79 may be provided to wash down and maintain the canopy in a substantially transparent condition. Such means typically incorporate hoses 80 extending over the canopy to spray water at 81 over the exposed surface, similar to a garden soaker hose. Hoses 80 run longitudinally of the canyon, while cells 61 extend laterally.

As shown in Figs. 1 and 7 to 10, power generating means 70 may be provided to be driven by the force of the air flow 50 generated and channelled by the duct 20. Typically, multiple air turbines 71 are coupled at 85 with electrical generators 72 to generate electricity in response to the flow of heated air 50 therethrough. In order for the air turbines to provide optimum power generation, certain included features are described as follows:

First, additional means 73 to channel the heated airflow 50 from the smaller, upper opening 23 of the duct 20 to each of the air turbines 71, as described, may include shutterlike structure 74. The latter controls airflow 50 into and between multiple air turbines 71 such that each turbine that is on line at a given time, in proportion to the total airflow through the duct, receives airflow sufficient to maintain its optimum power production and efficiency speed. A set of variable inlet guide vanes 75 are the major means of governing turbine speed. The vanes are varied from closed, which cuts off all airflow through the turbine, to part open, which tends to deflect the air against the turbine blades to maximize momentum transfer to full open, which allows maximum airflow through the turbine, to a slight reverse position which tends to brake the turbine somewhat to prevent overspeed conditions.

Second, involutes or scrolls 75a are provided at each air turbine 71 to pre-rotate the air to ensure maximum transfer of momentums from the airstream to the turbines. The scrolls rotate the air in the same direction as turbine rotation. In operation, air from the scroll inlet is turned by the scroll toward the turbine to rotate same. An extractor section is located beyond or above the turbine.

A secondary turbine 77 may be located atop the powerhouse, and resembles the extractor-ventilator turbines often seen atop buildings. It enables the recovery of energy both from the primary airstream and during these conditions, such as strong non-prevailing or nocturnal winds, when the primary system may not be operating at its rated output. As importantly, it also serves to break up and begin diffusing the strong vertical airflow from the air turbine 71 which serves as primary turbine. In addition, surface winds may cause the secondary turbine to rotate and function like the extractor it resembles, thereby reducing the pressure above the primary turbine and increasing primary airflow and efficiency. The secondary turbine may drive a second generator, or it may be geared to the primary generator through an appropriate system of differentials and one-way clutches, as at 95.

The rotation of primary turbines, or the turbine final stage in the case of a multi-stage air turbine 71, must be opposite that of the secondary turbine, in order to maximize momentum transfer from the airstream to the secondary turbine. Preferably the directions of rotation of the neighbouring secondary turbines are alternated, so the vortices exiting station will tend to combine destructively rather than combining into a single large vortex which might be undesirable. In addition, consideration is given to assuring that any net imbalance of vortices will be in a clockwise, or anti-cyclonic direction to minimize the risk that a vortex from the station could grown into a tornado-like phenomenon.

Fig. 11 is a section through an auxiliary support system of cables 90 for transparent plastics canopy panels 91. The cabels extend transversely across the canyon, and are anchored to the canyon walls. The canopy panels 91 have end portions 91a wrapped about the cables, and held together by extended plastics retainers 92 which are C-shaped in cross-section, as shown. This construction allows replacement of a panel at any location in the canopy, without interrupting the operation of the power plant.

The solar covering should be anti-reflective of incoming energy; that is, it permits most of the energy to pass through rather than reflecting a portion back towards the sky. Also, an ideal covering does not permit energy to pass back out from the collector to the sky. Fortunately, the earth radiates energy of a much longer wavelength than the sun, the difference being due to the temperature of the radiating body, so it is possible to make a cover or coating for a cover which allows solar radiation to pass through it, but block re-radiation by the earth. This is the so-called "Greenhouse Effect". Further, a solar cover should not be susceptible to "misting" since this could cut transmission significantly, as it does on eyeglasses when one comes from the cold into a warm moist area, or as it does on the bathroom mirror during a good hot shower. Misting is easily controlled with a coating sold under the Trade Mark "SUN CLEAR" by Solar Sunstill Inc., Setauket, New York, United States of America. Also, PVF film sold under the Trade Mark "TEDLAR" by DuPont of the United States of America, is inherently free of misting. Other available materials are fibre-glass reinforced plastics sheet sold by the Kalwall Corporation of Manchester, New Hampshire, United States of America, under the Trade Mark "SUN-LITE".

**Claims**

1. Apparatus for use in harnessing natural energy, particularly solar energy in the form of wind, characterised by a formation (10) of the earth's surface in combination with a thin and relatively flexible canopy (21) extending over the formation (10) and defining a longitudinally elongated duct (20) having a relatively larger opening (22) at a lower altitude end of the duct and a relatively smaller opening (23) at a higher altitude end of the duct, the duct cross-section tapering substantially continuously in the direction up the duct between the larger lower opening (22) and the smaller higher opening (23) and serving to channel and accelerate prevailing air flow in the direction up the duct.

2. Apparatus as claimed in claim 1 wherein the formation of the earth's surface comprises a channel or canyon.

3. Apparatus as claimed in claim 1 or claim 2 wherein said canopy is substantially transparent to solar radiation passage through the canopy for impinging on and heating the formation's walls, thereby to impart heat to the air proximate the walls (11) and located within said duct, the heated air, being of lesser density, being thereby caused to flow generally toward said higher opening (23) and colder, more dense air entering the duct at the lower opening (22), said heated air being channeled by said duct in its flow to the smaller opening where it is emitted, said cooler air entering the duct at the lower opening then being heated by the formation's walls, to flow upward to the smaller opening, generating a continuous flow within said duct.

4. Apparatus as claimed in claim 3 wherein said canopy includes structure (28) which thermally insulates and isolates heated air within said duct from surrounding air.

5. Apparatus as claimed in claim 3 or 4 wherein the canopy includes multiple panels (28) comprised of substantially transparent sheets of material.

6. Apparatus as claimed in claim 5 wherein at least one of said panels includes two sheets of plastics material forming insulating space (61) therebetween.

7. Apparatus as claimed in any one of claims 3 to 6 wherein said canopy includes a layer of material that allows solar radiation to pass therethrough, into the duct, and that reflects and retains within the duct radiation emitted and reflected by the formation's walls.

8. Apparatus as claimed in any preceding claim wherein said canopy is substantially trapezoidal in shape, defining four edges, wherein the first and second opposite edges (24, 25) substantially corresponding to the non-parallel converging sides of a trapezoid, are each sufficiently elongated and adapted to conform to the topography of, and are attached to, the respective side walls (11) of the formation and form a substantially air tight seal (30) between the edge of the canopy and the respective formation walls, defining said duct, the third canopy edge (26) extends between said first and second canopy edges, corresponding to the longer of the two substantially parallel edges of the trapezoid and, in combination with the earth formation, forms the larger, lower opening of the duct, and the fourth canopy edge (27) extends between said first and second canopy edges, corresponding to the shorter of the two substantially parallel edges of the trapezoid, and in combination with the earth formation, forms the smaller, higher opening of the duct.

9. Apparatus as claimed in claim 8 wherein said first and second edges of the canopy include structure (31) sufficient to form said substantially air tight seals between the canopy edges and the respective walls of the formation.

10. Apparatus as claimed in claim 9 wherein said structure includes at least one tubular portion (32), at said edge of the canopy, at least partially formed of sheet material, and forming a chamber (34) to interiorly contain flowable material.

11. Apparatus as claimed in claim 8, 9 or 10 wherein said third edge (26) of the canopy is substantially concave toward the duct.

12. Apparatus as claimed in any one of claims 3 to 7 or any one of claims 8 to 11 when claim 8 is directly or indirectly dependent upon claim 3 wherein the canopy includes multiple inflatable substantially tubular portions (61) serving at least partially to stiffen and retain said canopy in a suspended condition with respect to said formation.

13. Apparatus as claimed in claim 12, wherein the tubular portions are filled with helium.

14. Apparatus as claimed in any one of claims 3 to 7 or any one of claims 8 to 13 when claim 8 is directly or indirectly dependent upon claim 3 including at least one pylon structure (60) serving to at least partially retain said canopy in a suspended condition with respect to said formation, the pylon including a rocker, and cables (60a) connected to the pylons.

15. Apparatus as claimed in any one of claims 3 to 7 or any one of claims 8 to 14 when claim 8 is directly or indirectly dependent upon claim 3 including cleaning means (79) to wash down the upper surface of the canopy.

16. Apparatus as claimed in claim 15 wherein said cleaning means includes at least one hose extending partially over said canopy to distribute water over portions of the surface of said canopy to facilitate maintaining the transparency thereof.

17. Apparatus as claimed in claim 3 or any one of claims 4 to 16 as dependent upon claim 3, wherein the canopy is at least partially supported by the enclosed, heated air.

18. Apparatus as claimed in claim 3 or any one of claims 4 to 17 as dependent upon claim 3, further including power generating means (70) arranged to be driven by the force of the air flow that is channeled and accelerated by the duct.

19. Apparatus as claimed in claim 18 wherein said power generating means is located to receive the heated airflow emitted from said smaller, higher opening of the duct and to generate power in response thereto.

20. Apparatus as claimed in claim 18 or 19 wherein said power generating means includes an electrical generator.

21. Apparatus as claimed in claim 20 wherein said power generating means includes at least one air turbine and electrical generator combination, and said heated airflow within said duct is channeled by said duct generally toward the smaller, higher opening and then is further channeled into said air turbine wherein energy associated with the heated air is imparted to multiple turbine rotor blades causing rotor rotation which in turn causes rotation of the armature of said generator, thus generating electricity.

22. Apparatus as claimed in claim 21 including additional means including shutter structure (74) located to facilitate said further channeling of the heated air from the smaller, higher opening of the duct into said air turbine.

23. Apparatus as claimed in claim 22 wherein said additional means includes scrolls (75a) to control and pre-rotate said flow of heated air into and between multiple air turbines defined by the first named means.

24. Apparatus as claimed in claim 23 wherein said air turbines include variable stators and heated air channeled into each turbine has a controlled angle of incidence and a controlled flow serving to facilitate said transference of energy from the heated air to the turbine rotor.

25. Apparatus as claimed in claim 21, 22, 23 or 24 including secondary turbine means located adjacent the air turbines, which secondary turbines are adapted to be driven by external winds and serve to generate power therefrom and to facilitate extraction of the heated air and exhaust thereof to the environment by controlling the flow of heated air after is has passed through the air turbines, said secondary turbine means also extracting energy from the flow for power recovery.

**Revendications**

1. Installation destinée à être utilisée pour l'exploitation de l'ènergie naturelle, en particulier de l'énergie solaire, sous la forme de vent, caractérisé par une formation (10) de la surface de la terre en combinaison avec un dôme mince et relativement flexible (21) qui s'étend au-dessus de la formation (10) et délimite un conduit longitudinalement allongé (20), qui a une ouverture relativement grande (22) à une extrémité de faible altitude et une ouverture relativement petite (23) à une extrémité d'altitude plus élevée dont la section droite décroit de manière sensiblement continue en direction de la partie supérieure du conduit, entre la grande ouverture inférieure (22) et la petite ouverture supérieure (23, et qui sert à canaliser et à accélérer le courant d'air régnant dans le sense de la remontée du conduit.

2. Installation suivant la revendication 1, dans laquelle la formation de la surface, de la terre est constituée par un canal ou un canyon.

3. Installation suivant la revendication 1 ou la revendication 2 dans laquelle le dôme est sensiblement transparent et permet le passage à travers lui du rayonnement solaire afin qu'il frappe et chauffe les parois de la formation, et apporte aussi de la chaleur à l'air proche des parois (11) et situé à l'intérieur du conduit, l'air chauffé ayant une plus faible densité et étant par suite forcé de s'écouler dans l'ensemble vers l'ouverture supérieure (23) et de l'air froid, plus dense pénetrant dans le conduit par l'ouverture inférieure (22), cet air chauffé étant canalisé par le conduit dans son écoulement vers la petite ouverture d'où il s'échappe, tandis que l'air froid pénètre dans le conduit au niveau de l'ouverture inférieure et est ensuite chauffé par les parois de la formation, pour s'écouler de bas en haut vers la petite ouverture, ce qui engendre un courant continu dans le conduit.

4. Installation suivant la revendication 3, dans laquelle le dôme comprend une structure (28) qui isole thermiquement et sépare l'air chauffé contenu dans le conduit de l'air environnant.

5. Installation suivant la revendication 3 ou 4, dans laquelle le dôme comprend des panneaux multiples (28) composés de feuilles de matière sensiblement transparente.

6. Installation suivant la revendication 5, dans laquelle au moins l'un des panneaux comprend deux feuilles de matière plastique délimitant entre elles un espace isolant (61).

7. Installation suivant la revendication 3 à 6, dans laquelle le dôme comprend une couche de matière qui permet au rayonnement solaire de passer à travers elle, jusque dans le conduit et qui réfléchit et retient dans le conduit le rayonnement émis et réfléchi par les parois de la formation.

8. Installation suivant l'une des revendications précédentes, dans laquelle le dôme a une forme à peu près trapézoïdale, qui définit quatre bords, dans laquelle le premier et le deuxième bords opposés (24, 25) qui correspondent à peu près aux côtés convergents non parallèles d'un trapèze, sont chacun suffisamment allongés et adaptés pour se conformer à la topographie des parois latérales (11) de la formation, sont attachés aux parois latérales respectives et forment un joint (30) à peu près étanche à l'air entre le bord du dôme et la paroi correspondante de la formation, définissant ainsi le conduit, le troisième bord (26) du dôme s'étend entre les premier et deuxième bords du dôme, correspond au plus long des deux bords sensiblement parallèles du trapèze et délimite en combinaison avec la formation terrestre l'ouverture inférieure du conduit, et le quatrième bord du dôme (27) s'étend entre les premier et deuxième bords du dôme, correspond au plus court des deux bords sensiblement parallèles du trapèze et délimite en combinaison avec la formation terrestre la petite ouverture supérieure du conduit.

9. Installation suivant la revendication 8, dans laquelle les premier et deuxième bords du dôme comprennent une structure (31) suffisante pour former des joints sensiblement étanches à l'air entre les bords du dôme et les parois correspondantes de la formation.

10. Installation suivant la revendication 9, dans laquelle la structure comprend au bord du dôme, au moins une partie tubulaire (32), au moins partiellement formée d'une matière en feuille et formant une chambre (34) pour contenir intérieurement une matière fluide.

11. Installation suivant la revendication 8, 9 ou 10, dans laquelle le troisième bord (26) du dôme est sensiblement concave en direction du conduit.

12. Installation suivant l'une des revendications 3 à 7 ou l'une des revendications 8 à 11, lorsque la revendication 8 dépend directement ou indirectement de la revendication 3, dans laquelle le dôme comprend de multiples portions gonflables (61) sensiblement tubulaires, qui servent à raidir au moins partiellement et à retenir le dôme dans un état suspendu par rapport à la formation.

13. Installation suivant la revendication 12, dans laquelle les parties tubulaires sont remplies d'hélium.

14. Installation suivant l'une des revendications 3 à 7 ou l'une des revendications 8 à 13, lorsque la revendication 8 dépend directement ou indirectement de la revendication 3, comprenant au moins une structure de pylones (60) servant à retenir au moins partiellement le dôme à l'état suspendu par rapport à la formation, le pylone comprenant un bras oscillant et des cables (60a) reliés au pylone.

15. Installation suivant l'une des revendications 3 à 7, ou l'une des revendications 8 à 14, lorsque la revendication 8 dépend directement ou indirectement de la revendication 3, comprenant des moyens de nettoyage (79) pour laver la surface supérieure du dôme.

16. Installation suivant la revendication 15, dans laquelle les moyens de nettoyage comprennent au moins un tuyau qui s'étend partiellement sur la dôme pour distribuer de l'eau sur des parties de la surface de ce dôme et faciliter le maintien de la transparence de cette surface.

17. Installation suivant la revendication 3, ou l'une des revendications 4 à 16, lorsqu'elles dépendent de la revendication 3, dans laquelle le dôme est au moins partiellement supporté par l'air chauffé enfermé.

18. Installation suivant la revendication 3 ou l'une des revendications 4 à 17, lorsqu'elles dépendent de la revendication 3, comprenant en outre un moyen générateur de puissance (70) agencé pour être entraîné par la force du courant d'air qui est canalisé et accéléré par le conduit.

19. Installation suivant la revendication 18, dans laquelle le moyen générateur de puissance est disposé de manière à recevoir le courant d'air chauffé s'échappant par la petite ouverture supérieure du conduit et à engendrer de la puissance en répose à cette réception.

20. Installation suivant la revendication 18 ou 19, dans laquelle le moyen générateur de puissance comprend un générateur électrique.

21. Installation suivant la revendication 20, dans laquelle le moyen générateur de puissance comprend au moins un ensemble turbine à air et générateur électrique et le courant d'air chauffé à l'intérieur du conduit est canalisé par ce conduit, dans l'ensemble vers la petite ouverture supérieure et, ensuite est encore canalisé pout pénétrer dans la turbine à air, dans laquelle l'ènergie associés à l'air chauffé est transmise à des pales multiples de rotor de turbines en provoquant la rotation du rotor qui, á son tour provoque la rotation de l'armature de générateur, et engendre ainsi de l'électricité.

22. Installation suivant la revendication 21, comprenant des moyens additionnels comportant une structure de persiennes (74) disposée de façon à faciliter la canalisation supplémentaire de l'air chauffé de la petite ouverture supérieure du conduit dans la turbine à air.

23. Installation suivant la revendication 22, dans laquelle les moyens additionnels comprennent des volutes (75a) pour diriger et imprimer une rotation préalable au courant d'air chauffé pour l'introduire dans et entre les turbines à air multiples définies par le premier moyen cité.

24. Installation suivant la revendication 23, dan laquelle les turbines à air comprennent des stators variables et l'air chauffé canalisé dans chaque turbine a un angle d'incidence réglé et un débit réglé qui servent à faciliter la transmission de l'énergie de l'air chauffé au rotor de la turbine.

25. Installation suivant la revendication 21, 22, 23 ou 24 comprenant des turbines secondaires placés à proximité des turbines à air, lesquelles turbines secondaires sont adaptées pour être entraînées par les vents extérieurs et servent à engendrer de la puissance à partir de ceux-ci et à faciliter l'éxtraction de l'air chauffé et son rejet dan l'environment en réglant le flux d'air chauffé après qu'il ait traversé les turbines à air, ces turbines secondaires extrayant également de l'énergie du flux pour récupérer de la puissance.

**Patentansprüche**

1. Einrichtung für die Nutzbarmachung von natürlicher, Energie, insbesondere Sonnenenergie in der Form von Wind, gekennzeichnet durch eine Formation (10) der Erdoberfläche in Verbindung mit einer dünnen und relativ flexiblen Überdachung (21), die sich über die Formation (10) erstreckt und eine längsverlaufende Röhre (20) bildet, die eine relativ größere Öffnung (22) an einem in geringerer Höhe liegenden Ende der Röhre und eine relativ Kleinere Öffnung (23) an einem in größerer Höhe liegenden Ende der Röhre aufweist, wobei sich der Röhrenquerschnitt in Aufwärtsrichtung der Röhre zwischen der größeren unteren Öffnung (22) und der kleineren höheren Öffnung (23) im wesentlichen kontinuierlich verjüngt und dazu dient, den vorhandenen Luftstrom in Aufwärtsrichtung der Röhre zu leiten un zu beschleunigen.

2. Einrichtung nach Anspruch 1, dadurch gekennzeichnet, daß die Formation der Erdoberfläche au einer Rinne oder einer Schlucht besteht.

3. Einrichtung nach Anspruch 1 oder 2, dadurch gekennzeichnet, daß die Überdachung für einen Durchtritt von Sonnenstrahlung durch die Überdachung sowie Beaufschlagung und Erwärmung der Formationswände durchlässig ist, um der in der Nähe der Wände (11) innerhalb der Röhre vorhandenen Luft Wärme zu vermitteln, wodurch die erwärmte Luft, die eine geringere Dichte hat, im allgemeinen zu der höheren Öffnung (23) hin strömt un kältere, dichtere Luft an der unteren Öffnung (22) in die Röhre einströmt, und daß die erwärmte Luft in ihrer Strömung durch die Röhre zu der kleineren Öffnung hochzuströmen und einen tritt, und die an der unteren Öffnung in die Röhre einströmende kältere Luft sodann durch die Formationswände erwärmt wird, um zu der kleineren Öffnung hochzutröment und einen kontinuierlichen Luftstrom innerhalb der Röhre zu erzeugen.

4. Einrichtung nach Anspruch 3, dadurch gekennzeichnet, daß die Überdachung eine Ausbildung (28) aufweist, die wärmeisolierend ist und die erwärmte Luft in der Röhre gegen die Umgebungsluft isoliert.

5. Einrichtung nach Anspruch 3 oder 4, dadurch gekennzeichnet, daß die Überdachung eine Vielzahl von Feldern (28) umfaßt, die aus im wesentlichen durchsichtigem Flachmaterial bestehen.

6. Einrichtung nach Anspruch 5, dadurch gekennzeichnet, daß zumindest eines der Felder zwei Kunststoffolien umfaßt, die zwischen sich einen Isolierraum (61) bilden.

7. Einrichtung nach einem der Ansprüche 3 bis 6, dadurch gekennzeichnet, daß die Überdachung eine Materiallage umfaßt, die einen Durchtritt von Sonnenstrahlung in die Röhre hinein zuläßt und von den Formationswänden abgegebene und abgestrahlte Strahlung reflektiert und in der Röhre zurückhält.

8. Einrichtung nach einem der vorhergehenden Ansprüche, dadurch gekennzeichnet, daß die Überdachung eine im wesentlichen trapezförmige Gestalt hat und vier Ränder bildet, wobie der erste und der diesem gegenüberliegende zweite Rand (24, 25), die im wesentlichen den nicht parallelen, konvergierenden Seiten eines Trapezes, entsprechen, jeweils genügend langgestreckt, der Oberflächengestaltung der jeweiligen Seitenwände (11) der Formation anpaßbar und daran befestigt sind und zwischen dem Rand der Überdachung und den jeweiligen Formationswänden, die die Röhre begrenzen, eine im wesentlichen luftundurchlässige Abdichtung (30) bilden, daß der dritte Überdachungsrand (26) sich zwischen dem ersten und dem zweiten Überdachungsrand erstreckt und dem längeren der beiden im wesentlichen parallelen Ränder des Trapezes entspricht sowie in Verbindung mit der Erdformation die größere, untere Öffnung der Röhre bildet, und daß der vierte Überdachungsrand (27) sich zwischen dem ersten und dem zweiten Überdachungsrand erstreckt und dem kürzeren der beiden im wesentlichen parallelen Ränder des Trapezes entspricht sowie in Verbindung mit der Erdformation die kleinere, höhere, Öffnung der Röhre bildet.

9. Einrichtung nach Anspruch 8, dadurch gekennzeichnet, daß der erste und der zweite Rand der Überdachung eine Ausbildung (31) aufweisen, mittels der die im wesentlichen luftdichten Abdichtungen zwischen den Überdachungsrändern und den jeweiligen Wänden der Formation gebildet sind.

10. Einrichtung nach Anspruch 9, dadurch gekennzeichnet, daß die Ausbildung zumindest einen rohrförmigen Teil (32) am Rand der Überdachung umfaßt, der zumindest teilweise aus Folienmaterial gebildet ist und eine Kammer (34) zum Enthalten von fließfähigem Material in ihrem Inneren bildet.

11. Einrichtung nach Anspruch 8, 9 oder 10, dadurch gekennzeichnet, daß der dritte Rand (26) der Überdachung im wesentlichen konkav zu der Röhre hin ist.

12. Einrichtung nach einem Ansprüche 3 bis 7, oder einem der Anrpsüche 8 bis 11 bei mittelbarer oder unmittelbarer Abhängigkeit des Anspruchs 8 von Anspruch 3, dadurch gekennzeichnet, daß die Überdachung eine Vielzahl von aufblasbaren, im wesentlichen rohrförmigen Teilen (61) aufweist, die zumindest teilweise dazu dienen, die Uberdachung zu versteifen und in einem Schwebezustand zur Formation zu halten.

13. Einrichtung nach Anspruch 12, dadurch gekennzeichnet, daß die rohrförmigen Teile mit Helium gefüllt sind.

14. Einrichtung nach einem der Ansprüche 3 bis 7, oder einem der Ansprüche 8 bis 13 bei mittelbarer oder unmittelbarer Abhängigkeit des Anspruchs 8 von Anspruch 3, gekennzeichnet, durch zumindest einen Pfeiler (60), der dazu dient, die Überdachung zumindest teilweise in einem Schwebezustand zur Formation zu halten, wobei der Pfeiler eine Kufe aufweist und Kabel (60a) mit den Pfeilern verbunden sind.

15. Einrichtung nach einem der Ansprüche 3 bis 7 oder einem der Ansprüche 8 bis 14 bei mittelbarer oder unmittelbarer Abhängigkeit des Anspruchs 8 von Anspruch 3, gekennzeichnet durch eine Reinigungsvorrichtung (79) zum abwaschen der Oberfläche der Überdachung.

16. Einrichtung nach Anspruch 15, dadurch gekennzeichnet, daß die Reinigungsvorrichtung zumindest einen sich teilweise über die Uberdachung erstreckenden Schlauch zum Verteilen von Wasser über Oberflächenbereiche der Überdachung aufweist, um deren Transparenz leichter aufrechtzuerhalten.

17. Einrichtung nach Anspruch 3 oder einem der Ansprüche 4 bis 16 bei Abhängigkeit von Anspruch 3, dadurch gekennzeichnet, daß die Überdachung zumindest teilweise von der eingeschlossenen erwärmten Luft abgestützt ist.

18. Einrichtung nach Anspruch 3, oder einem der Ansprüche 4 bis 17 bei Abhängigkeit von Anspruch 3, gekennzeichnet durch eine Stromerzeugungsanlage (70), die derart angeordnet ist, daß sie von der Kraft des von der Röhre geführten und beschleunigten Luftstroms angetrieben wird.

19. Einrichtung nach Anspruch 18, dadurch gekennzeichnet, daß die Stromerzeugungsanlage derart angeordnet ist, daß sie den aus der kleineren höheren Öffnung der Röhre austretenden Luftstrom augnimmt und als Folge dessen Strom erzeugt.

20. Einrichtung nach Anspruch 18 oder 19, dadurch gekennzeichnet, daß die Stromerzeugungsanlage einen elektrischen Generator umfaßt.

21. Einrichtung nach Anspruch 20, dadurch gekennzeichnet, daß die Stromerzeugungsanlage zumindest eine Kombination aus Luftturbine und elektrischem Generator umfaßt und der erwärmte Luftstrom innerhalb der Röhre durch diese im allgemeinen der kleineren,, höheren Öffnung zugeführt und sodann in die Luftturbine weitergeleitet wird, in der der erwärmten Luft innewohnende Energie einer Vielzahl von Turbinenrotorschaufeln vermittelt wird, die eine Rotordrehung bewirkt, die ihrerseits eine Drehung des Rotors des Generators hervorruft und somit Elektrizität erzeugt.

22. Einrichtung nach Anspruch 21, gekennzeichnet, durch eine Zusatzvorrichtung, die eine Klappenanordnung (74) umfaßt, die derart angeordnet ist, daß sie die Weiterleitung der erwärmten Luft von der Kleineren, höheren Öffnung der Röhre in die Luftturbine hinein begünstigt.

23. Einrichtung nach Anspruch 22, dadurch gekennzeichnet, daß die Zusatzvorrichtung eine rollenförmige Leitvorrichtung (75a) umfaßt, die den erwärmten Luftstrom steuert und in eine Vorrotation in von der erstgenannten Anlage gebildete Mehrfachluftturbinen hinein und zwischen diesen versetzt.

24. Einrichtung nach Anspruch 23, dadurch gekennzeichnet, daß die Luftturbinen veränderliche Statoren umfassen und die in jede Turbine geleitete erwärmte Luft eine gesteuerte Einströmrichtung und eine gesteuerte Strömung aufweist, um den Energieübergang aus der erwärmten Luft auf den Turbinenrotor zu begünstigen.

25. Einrichtung nach Anspruch 21, 22, 23 oder 24, gekennzeichnet durch eine in der Nähe der Luftturbinen angeordnete zweite Turbinenanlage, wobei die zweiten Turbinen von äußerent Windströmen antreibbar sind und dazu dienen, aus diesen Strom zu erzeugen sowie das Herausführen der erwärmten Luft und deren Abführen in die Umgebung durch Steuern des erwärmten Luftstromes nach dessen Durchtritt durch die Luftturbinen zu begünstigen, und wobei die zweite Turbinenanlage ferner dem Luftstrom Energie zur Stromgewinnung entnimmt.

FIG. 1.

FIG. 2.

1

**FIG. 3.**

**FIG. 4.**

**FIG. 5.**

FIG.6.

FIG.6a.

FIG.7.

FIG.8.

3

FIG. 9.

FIG. 10.

FIG. 11.

4